# EUROPEAN PATENT SPECIFICATION

(11) **EP 4 328 694 B1**
(45) Date of publication and mention of the grant of the patent: **24.12.2025**
(21) Application number: 23182436.8
(22) Date of filing: 29.06.2023
(51) Int. Cl.: G05D 1/224, G05D 1/227, G05D 107/13, G05D 109/10, G05D 1/22, G08G 1/0968, G08G 1/00, G05D 105/22

(54) **METHOD AND SYSTEM FOR CONTROLLING MOBILE VEHICLE**
VERFAHREN UND SYSTEM ZUR STEUERUNG EINES MOBILEN FAHRZEUGS
PROCÉDÉ ET SYSTÈME DE COMMANDE DE VÉHICULE MOBILE

(30) Priority: 23.08.2022 JP 2022132630
(43) Date of publication of application: 28.02.2024
(73) Proprietor: TOYOTA JIDOSHA KABUSHIKI KAISHA, Toyota-shi, Aichi-ken, 471 8571 (JP)
(72) Inventor: YAMAZATO, Narihito, Tokyo, 103-0022 (JP); ICHIKAWA, Kentaro, Tokyo, 103-0022 (JP); HIRANO, Maiko, Tokyo, 103-0022 (JP); ADACHI, Yoshitaka, Tokyo, 103-0022 (JP); TAGUCHI, Koji, Tokyo, 103-0022 (JP)
(74) Representative: J A Kemp LLP

(56) References cited:
- EP-A1- 3 971 857
- WO-A1-2021/177052

## Description

### TECHNICAL FIELD

The present disclosure relates to a method and a system for controlling a mobile vehicle having an autonomous driving function and a remote support receiving function.

### BACKGROUND

JP2021-022319A discloses a vehicle control device for selectively implementing two operation modes of driving devices of a vehicle. The two operation modes include an autonomous driving mode and a remote driving mode. The conventional control device controls the driving device based on the operation information autonomously generated by the control device while the autonomous driving mode is selected. On the other hand, when the remote driving mode is selected, the control device of the related art controls the driving devices based on remote driving information from a remote operator.

The control device of the related art also predicts a section for selecting an autonomous driving mode (autonomous driving section) and a section for selecting a remote driving mode (remote driving section) based on path information on autonomous driving of the vehicle. When the vehicle approaches a remote driving section, the control device of the related art requests the remote driving information to the remote operator. When the remote driving information is provided in response to the request, the control device of the related art switches the operation mode of the vehicle from the autonomous driving mode to the remote driving mode.

In addition to JP2021-022319A, references indicating the art to which the present disclosure pertain include WO2021/177052, JP2019-191893A and JP2017-174282A.

EP 3,91,857 discloses a method for controlling a mobile vehicle.

### SUMMARY

In the control device of the related art, when an actual position of the vehicle is in the autonomous driving section and the actual position is away from a remote driving section, the autonomous driving mode is selected. However, even in such a case, there may be a case where a remote support by the remote operator including a remote driving is required. In this case, a problem is how to continue the autonomous driving of the vehicle from a timing at which it is determined that remote support is required to a timing at which the vehicle receives the information on the remote support provided in response to the determination.

In particular, when the response to the request for the remote support is not immediately performed, it is considered that the autonomous driving is performed in which the vehicle temporarily stops in front of a factor of the remote support exists. That is, in this case, the vehicle waits for reception of the information on the remote support in front of the factor of the remote support exists. However, the occurrence of the waiting time may cause a sense of insecurity to an occupant of the vehicle or may affect a traffic flow around the vehicle. Therefore, it can be said that there is room for development of a technique for preventing occurrence of such a problem.

An object of the present disclosure is to provide a technique capable of appropriately responding to a sudden request for the remote support that occurs during the autonomous driving of the mobile vehicle having the autonomous driving function and the remote support receiving function.

The invention is defined in independent claims 1 and 4. Further aspects and preferred embodiments are defined in the dependent claims. Any aspects, embodiments and examples of the present disclosure which do not fall under the scope of the appended claims do not form part of the invention and are merely provided for illustrative purposes.

According to the present disclosure, the control mode for autonomous driving of the mobile vehicle is selected from among options including the first, second, third, and fourth modes, the control mode corresponding to the combination of the determination result indicating whether the remote support is required and the identification result of the condition of the remote support end. Then, information on the selected control mode is transmitted to the mobile vehicle. Therefore, according to the present disclosure, it is possible to appropriately perform the autonomous driving of the mobile vehicle in accordance with a combination of the determination result and the identification result.

### BRIEF DESCRIPTION OF DRAWINGS

Fig. 1 is a diagram illustrating a remote support for a mobile vehicle;
Fig. 2 is a diagram illustrating an autonomous driving function of the mobile vehicle;
Fig. 3 is a diagram illustrating an example of a vehicle control mode set in the embodiment;
Fig. 4 is a diagram illustrating an example of selecting the vehicle control mode based on a determination result as to whether or not the remote support is required for the mobile vehicle;
Fig. 5 is a diagram illustrating an example of selecting the vehicle control mode based on a result of specifying a state on the remote support end that treats the remote support for the mobile vehicle;
Fig. 6 is a diagram illustrating an example of selecting the vehicle control mode based on an identification result of a condition on the remote support end that treats the remote support for the mobile vehicle;
Fig. 7 is a diagram illustrating an example of selecting the vehicle control mode based on a combination of the determination result as to whether or not the remote support is required for the mobile vehicle and the identification result of the condition on the remote support end that treats the remote support;
Fig. 8 is a block diagram illustrating a configuration example of a management server;
Fig. 9 is a block diagram illustrating a configuration example of the mobile vehicle;
Fig. 10 is a block diagram illustrating a configuration example of an operator terminal; and
Fig. 11 is a flowchart illustrating processing flow executed in the management server (a processor) and particularly relevant to the embodiment.

### DESCRIPTION OF EMBODIMENT

Hereinafter, a method, a control device, and a control program for a mobile vehicle according to embodiment of the present disclosure will be described with reference to the accompanying drawings. The control method according to the embodiment is realized by computer processing executed by the control device according to the embodiment. In the drawings, the same or corresponding parts are denoted by the same reference numerals, and the description thereof will be simplified or omitted.

### 1. Remote support

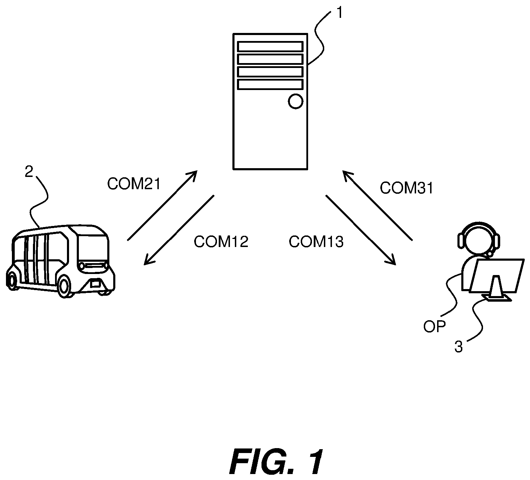

Fig. 1 is a diagram illustrating remote support for a mobile vehicle. Fig. 1 illustrates a management server 1, a vehicle 2, and a terminal 3 of an operator OP (hereinafter also referred to as an "operator terminal").

The management server 1 is an example of the control device according to the embodiment. The management server 1 manages a remote support service. The management server 1 is typically managed by a business operator of a remote support service. The management server 1 communicates with the vehicle 2 and the operator terminal 3.

The vehicle 2 is an example of a mobile vehicle controlled by the control device according to the embodiment. The vehicle 2 has a function to receive the remote support (a remote support receiving function). The vehicle 2 may be a vehicle owned by a business operator of the remote support service, or may be a vehicle owned by a corporation or an individual who makes a contract with the business operator to provide the remote support service. The vehicle 2 has a function to perform autonomous driving (an autonomous driving function) in addition to the remote support receiving function. The autonomous driving function will be described later.

The operator OP performs the remote support for the vehicle 2. The operator OP may be an employee of the business operator that provides the remote support service, or may be an employee or an individual of the corporation that has entered into a subcontracting contract with the business operator. The total headcount of the operator OPs engaged in the remote support service is at least 2. The total headcount of the operator OPs who treat the remote support for the vehicle 2 is at least one person, and the selection of the at least one person (person in charge) is performed by the management server 1.

Here, the "at least one person" means that there is one or more operator OPs (that is, candidates of the operator OP) scheduled to treat the remote support for the vehicle 2. When the remote support for the vehicle 2 is performed, at least one operator OP (that is, a practical operator) is selected from the candidates of the at least one person. The selection of the at least one practical operator is also performed by the management server 1.

Examples of the remote support include a recognition support and a determination support. For example, it is assumed that the vehicle 2 is performing autonomous driving. When a traffic light in front of the vehicle 2 is exposed to sunlight, an accuracy of the recognition of the luminescent state of the traffic light decreases. When the luminescent state cannot be recognized, it is difficult to determine what kind of action should be executed at what timing. In such a case, the recognition support of the luminescent state by the operator OP and/or the determination support of the action of the vehicle 2 based on a recognition result of the luminescent state by the operator OP is performed.

The remote support also includes remote driving. In the remote driving, for example, the operator OP performs at least one driving operation of a steering, an acceleration, and a deceleration of the vehicle 2 with reference to a camera image showing surroundings of the vehicle 2, a camera image showing an interior of the vehicle 2, and the like.

Fig. 1 illustrates data COM12 and COM21 exchanged between the management server 1 and the vehicle 2 (more precisely, a terminal mounted on the vehicle 2), and data COM13 and COM31 exchanged between the management server 1 and the operator terminal 3. The data COM12 is transmitted from the management server 1 to the vehicle 2. The data COM21 is transmitted from the vehicle 2 to the management server 1. The data COM13 is transmitted from the management server 1 to the operator terminal 3. The data COM31 is transmitted from the operator terminal 3 to the management server 1.

Examples of the data COM21 include data for identifying the vehicle 2, data of a camera image showing the surroundings of the vehicle 2, and data of a camera image showing the interior of the vehicle 2. Examples of the data COM21 include various data when the vehicle 2 requests the remote support (e.g., the data identifying the vehicle 2, the data of the camera image, data indicating a remote support content, and the like). Examples of the data COM13 include data corresponding to a selection result of the operator OP who treats the remote support for the vehicle 2. Examples of the data COM31 and COM12, data of the recognition support and the determination support by the operator OP. When the remote driving of the vehicle 2 is performed, the data of the driving operation is included in the data COM31 and COM12.

### 2. Autonomous driving function

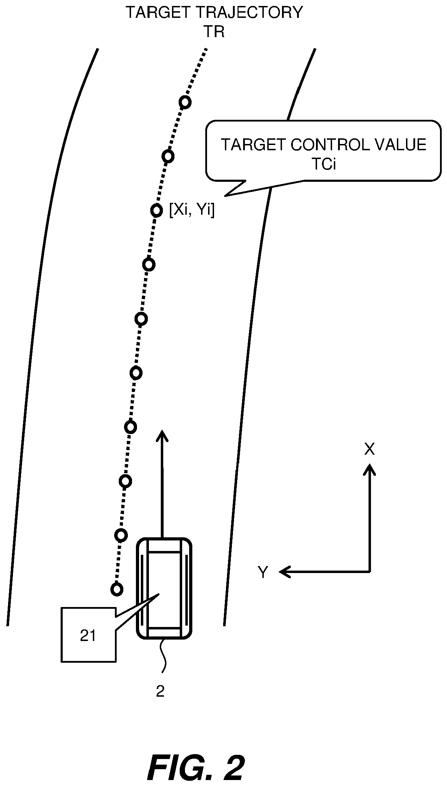

Fig. 2 is a diagram illustrating the autonomous driving function of the vehicle 2. Fig. 2 illustrates a data processing device 21 of the vehicle 2. The data processing device 21 is a computer that controls the behavior of the vehicle 2. Typically, the data processing device 21 is mounted on the vehicle 2. At least a part of the functions of the data processing device 21 may be realized as functions of an external device provided outside the vehicle 2. That is, at least a part of the functions of the data processing device 21 may be realized by the vehicle 2 and the external device in a distributed manner.

The data processing device 21 executes, for example, vehicle control for autonomous driving of the vehicle 2. In the vehicle control, for example, a steering, an acceleration, and a deceleration of the vehicle 2 are controlled such that the vehicle 2 follows a target trajectory TR. The target trajectory TR is a trajectory along which the vehicle 2 should travel. The target trajectory TR is generated based on, for example, a driving route from a departure point of the vehicle 2 to a destination point. The driving route is calculated by, for example, a navigation system (not shown). The target trajectory TR may be generated based on peripheral information of the vehicle 2, or may be generated based on a combination of the driving route and the peripheral information.

The target trajectory TR includes, for example, a set of target control values TCi in the vehicle control for autonomous driving. As the target control value TCi, a target position [Xi, Yi] through which the vehicle 2 should pass is exemplified. In the example shown in Fig. 2, the X direction is a forward direction of the vehicle 2, and the Y direction is a planar direction orthogonal to the X direction. However, the coordinate system (X, Y) is not limited to the example shown in Fig. 2. The target position [Xi, Yi] is set on the target trajectory TR at a predetermined service frequency (e.g., 1 to 2 meter). The target position [Xi, Yi] is set, for example, from several seconds to several tens of seconds ahead from the current time.

The target control value TCi may be a combination of the target position [Xi, Yi] and the target speed [VXi, VYi] of the vehicle 2 at the target position [Xi, Yi]. The target time at the target position [Xi, Yi] may be used instead of the target speed [VXi, VYi]. When the target time is used, the target control value TCi may further include an azimuth of the vehicle 2 at the target time. The target control value TCi may include, in addition to the target position [Xi, Yi] and the target speed [VXi, VYi] at least one of a target yaw angle of the vehicle 2 at the target position [Xi, Yi] and a target acceleration of the vehicle 2 at the target position [Xi, Yi].

In order to cause the vehicle 2 to follow the target trajectory TR, in the vehicle control for autonomous driving, a deviation (e.g., a position deviation, a speed deviation, a time deviation, a yaw angle deviation, a speed deviation, or the like) between a target vehicle state corresponding to the target control value TCi and a current vehicle state of the vehicle 2 is calculated. In the vehicle control, an instruction for control value of a driving device (an actuator) of the vehicle 2 is calculated so as to reduce the deviation. In other words, the instruction for control value is a command value for controlling the current vehicle state to the target vehicle state. The driving device includes a steering device, a driving device, and a braking device. Then, the driving device is controlled based on the instruction for control value.

### 3. Vehicle control mode MD

In the embodiment, a vehicle control mode MD for autonomous driving is configured. Setting of the vehicle control mode MD is performed by the management server 1. The information of the vehicle control mode MD is transmitted from the management server 1 to the vehicle 2 every time the vehicle control mode MD is set. The vehicle 2 performs vehicle control for autonomous driving with reference to the information of the vehicle control mode MD. Hereinafter, the information of the vehicle control mode MD transmitted from the management server 1 to the vehicle 2 is also referred to as "mode information MDE". The mode information MDE is included in the data COM12 shown in Fig. 1.

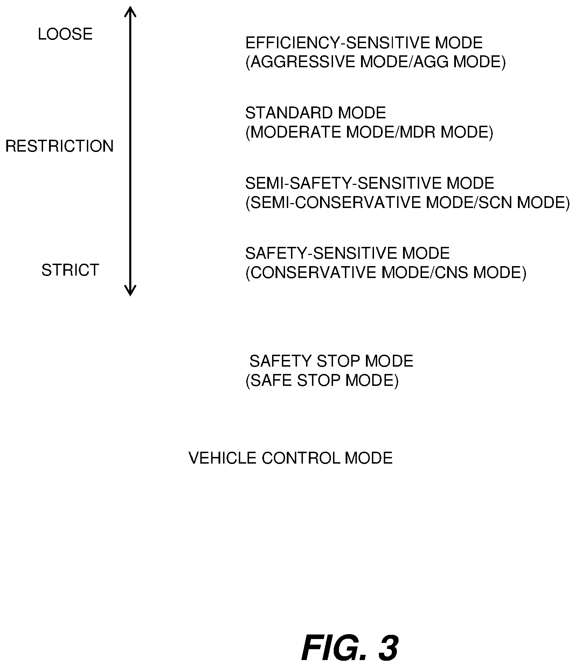

Fig. 3 is a diagram illustrating an example of the vehicle control mode MD set in the embodiment. In the example shown in Fig. 3, five types of vehicle control mode MDs including an efficiency-sensitive mode (aggressive mode or AGG mode), a standard mode (moderate mode or MDR mode), a semi-safety-sensitive mode (semi-conservative mode or SCN mode), a safety-sensitive mode (conservative mode or CNS mode), and a safety stop mode (safe stop mode) are set as the vehicle control mode MDs.

The four types of vehicle control mode MDs except for the safety stop mode are different in the driving severity of a safety restriction. This restriction is the most strict in the safety-sensitive mode, and becomes loose in the order of the semi-safety-sensitive mode, the standard mode, and the efficiency-sensitive mode. The safety stop mode is a vehicle control mode MD which is not restricted by restrictions on the driving safety. When the safety stop mode is set, the vehicle control for stopping the vehicle 2 in a breakdown lane or a side strip is performed.

"The driving severity of the safety restriction" can be evaluated by focusing on at least one of the following items of a plurality of candidates of the driving route calculated by the navigation system, for example.

For example, a case where a plurality of candidates of the driving route are routes passing through both a general road and an expressway will be considered. In this case, it is expected that an amount of information to be recognized by the vehicle for driving safety increases as a ratio of the distance along the general road increases. In addition, it is expected that the total number of times of lane change and the total number of times of travel direction change such as right turn and left turn required when passing through the driving route decreases as the ratio of the distance passing through the expressway increases. Therefore, a candidate of the driving route having a high ratio of the distance passing through the general road may be evaluated as the candidate of "strict restriction on the driving safety", and a candidate of the driving route having a low ratio of the distance passing through the general road may be evaluated as the candidate of "loose restriction on the driving safety".

In another example, consider a case where the candidates for driving route are routes that pass through both urban and suburban areas. In this case, it is expected that the amount of information to be recognized by the vehicle for the driving safety increases as the ratio of the distance passing through the urban area increases. Therefore, a candidate of the driving route having a high ratio of the distance passing through the urban area can be evaluated as a candidate of "strict restriction on the driving safety". Note that the urban area and the suburban area can be distinguished based on map information (e.g., population density information).

In still another example, a case is considered in which a plurality of candidates of the driving route includes information on traffic volume (e.g., traffic volume of vehicles and walkers per unit time) in a region through which the driving route passes. In this case, it is expected that the information amount to be recognized by the vehicle for driving safety increases as the traffic volume increases. Therefore, the candidate of the driving route with a large traffic volume can be evaluated as a candidate of "strict restriction on the driving safety". The area through which the driving route passes can be represented by, for example, connecting unit areas obtained by dividing the map in increments of a predetermined area (e.g., in increments of 50 to 100m2) along the driving route. Further, the traffic volume in the region through which the driving route passes can be calculated by adding the traffic volumes in the unit sections connected along the driving route.

According to the above-described evaluation items such as the ratio of the distance passing through the general road, the ratio of the distance passing through the urban area, and the traffic volume in the region through which the driving route passes, a plurality of candidates of the driving route can be ranked by an aspect of "the driving severity of the safety restriction". In the embodiment, processing to associate these candidates with the above-described four types of the vehicle control mode MDs (e.g., the four types of vehicle control mode MDs excluding the safety stop mode) is performed according to the height of the rank.

Other examples of the evaluation of "the driving severity of the safety restriction" include various limit values, thresholds, and variables used in the vehicle control for autonomous driving.

Examples of the various limit values used in the vehicle control include upper limits or lower limits of target control values such as speed, acceleration (or deceleration), jerk, and steering angular velocity. By setting the upper limits or the lower limits of the target control values in multiple stages, it is possible to provide differences in "the driving severity of the safety restriction".

Examples of the various thresholds used in vehicle control include an inter-vehicular distance (or inter-vehicle time) when the vehicle control to follow a preceding vehicle is performed, and a margin distance in a transverse direction, a speed when passing by an obstacle, and an allowable amount of protrusion from a lane on which the vehicle is currently traveling to pass by the obstacle when the vehicle control to avoid a collision with an obstacle is performed. A distance used for determining whether or not to perform the vehicle control to change lanes (e.g., a distance between two vehicles traveling in parallel when cut into lane change is performed between these vehicles) is also an example of the threshold. By setting such a threshold in multiple stages, it is possible to make a difference in "the driving severity of the safety restriction".

Examples of various variables used in the vehicle control include variables used for calculation of a risk of collision with an obstacle, a risk of a moving body jumping out of a blind spot of a vehicle, and the like. Examples of the variable include variables (assumed acceleration, allowable error, and the like) input to a model for predicting the future position of an obstacle or a moving body. Variables used in the vehicle control include reliability of a recognition result of an object recognized by the vehicle and a state thereof (for example, traffic light and a lighting color thereof). By setting such variables in multiple stages, "the driving severity of the safety restriction" can be differentiated.

In the embodiment, the various limit values, thresholds and variables described above are each pre-ranked into at least four levels in the aspect of "the driving severity of the safety restriction". The various ranked limit values, thresholds, and variables are associated with the four types of vehicle control modes MD described above.

### 4. Selection example of Vehicle control mode MD

In the embodiment, the above-described five types of vehicle control mode MDs (i.e., all vehicle control mode MDs including the safety stop mode) are selected based on at least one of the need NDS of the remote support for the vehicle 2 and the condition CND on the remote support end that treats the remote support.

### 4-1. Need NDS of Remote support

The presence or absence of the need NDS is determined by the management server 1. Information for determining the presence or absence of the need NDS is provided from the vehicle 2, the management server 1, or an arbitrary predictor.

For example, the vehicle 2 recognizes an object included in a camera image showing the surroundings of the vehicle 2. Further, the vehicle 2 detects a motion of the recognized object. For example, when it is difficult to recognize an object included in the surrounding image, the vehicle 2 requests the management server 1 to recognize the object. When the management server 1 receives the request information, it is determined that there is need NDS. In another example, when an object is recognized but an unnatural motion of the object is detected, the vehicle 2 requests the management server 1 to confirm the state of the object. When the management server 1 receives this request information, it is also determined that there is need NDS.

The vehicle 2 may recognize the state of an occupant (e.g., a driver) included in the camera image showing the interior of the vehicle 2. When an abnormal state of the driver is recognized, the vehicle 2 may request the management server 1 to confirm the abnormal state. When the management server 1 receives this request information, it is also determined that there is need NDS. The vehicle 2 may detect the motion of the object around the vehicle 2 based on information from a recognition sensor other than the camera. When an unnatural motion of the object is detected, the vehicle 2 may request the management server 1 to confirm the state of the object. When the management server 1 receives this request information, it is also determined that there is need NDS.

The management server 1 can appropriately acquire the camera image of the vehicle 2 (e.g., the surrounding image and the interior image) and information other than the camera image (e.g., information from the recognition sensor other than the camera and information from an internal sensor of the vehicle 2). Therefore, when the object recognition function and the driver state recognition function of the vehicle 2 are provided, the management server 1 can recognize the object included in the camera image of the vehicle 2, detect the motion of the recognized object, and recognize the driver status of the vehicle 2. When the unnatural motion of the object is detected, when the abnormal state of the driver is recognized, or when the abnormal state of the vehicle 2 is detected, the management server 1 determines that the need NDS is present.

The arbitrary predictor is formed inside the management server 1, for example. The arbitrary predictor may be formed outside the management server 1. The arbitrary predictor predicts an occurrence of the remote support for vehicle 2 by machine learning using, for example, time-series data of the camera image of the vehicle 2, time-series data of the camera image of another vehicle, time-series data of an image of an infrastructure camera installed at an intersection or the like, or provision history data of the remote support service (e.g., a time period and a place). When the occurrence of remote support for the vehicle 2 is predicted, the arbitrary predictor generates prediction information and transmits the prediction information to the management server 1. When this prediction information is received, the management server 1 determines that there is need NDS.

The management server 1 determines the presence or absence of need NDS based on information provided from the vehicle 2, the management server 1, or any predictor. Then, based on a result of this determination, the management server 1 selects one vehicle control mode MD from the five types of the vehicle control mode MDs described above.

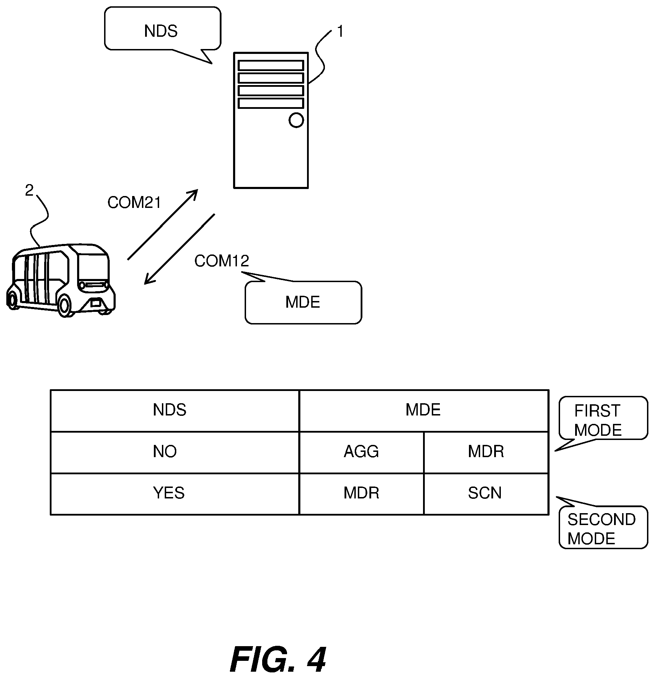

Fig. 4 is a diagram illustrating a selection example of the vehicle control mode MD based on the determination result of the presence or absence of need NDS. In the first example shown in Fig. 4, when it is determined that there is no need NDS (NO), the AGG mode is selected, and when it is determined that there is need NDS (YES), the MDR mode is selected. In this example, the AGG mode corresponds to the "first mode" of the present disclosure and the MDR mode corresponds to the "second mode" of the present disclosure.

Here, the difference between the first mode and the second mode is "the severity of the safety restriction". That is, the restriction on the driving safety of the second mode is stricter than that of the first mode. A relationship between the AGG mode and the MDR mode is the relationship between the first mode and the second mode.

In the second example shown in Fig. 4, when it is determined that there is no need NDS (NO), the MDR mode is selected, and when it is determined that there is need NDS (YES), the SCN mode is selected. In this example, the MDR mode corresponds to the "first mode" of the present disclosure and the SCN mode corresponds to the "second mode" of the present disclosure. A relationship between the MDR mode and the CR mode is the relationship between the first mode and the second mode.

### 4-2. Condition CND on Remote support end

A remote support end is defined as an entire system that performs the remote support for the vehicle 2, including the management server 1, the operator OP and the operator terminal 3. A condition CND on the remote support end is roughly classified into a ready condition (RD condition) in which a preparation to treat the remote support is completed and an unready condition (URD condition) in which the preparation to the remote support is not completed. The unready condition is subdivided into an available condition (AV condition) in which a preparation for switching to the ready condition is completed and an unavailable condition (UAV condition) in which the preparation for switching to the ready condition is not completed.

Which of the three types of conditions described above the condition CND is in is identified based on, for example, a selection state of an operator OP scheduled to treat the remote support for the vehicle 2 (i.e., a candidate of the person to respond to the remote support). Specifically, when the candidate of the responder is selected and the approval signal from the candidate is detected, it is determined that the condition CND corresponds to the ready condition. If the candidate of the responder has been selected but the approval signal from the candidate has not been detected, the condition CND is identified as corresponding to the unavailable condition. If the candidate of the responder has not been selected and the candidate of the responder is insufficient, it is determined that the condition CND corresponds to an unavailable condition.

In another example, the condition CND is identified based on a condition of the operator OP (i.e., a practical operator) selected from among candidates of the responder upon the remote support. Specifically, when the selection of the practical operator is completed and the approval signal from the practical operator is detected, it is determined that the condition CND corresponds to the ready condition. When the practical operator notifies the management server 1 whether the grasping of a situation where the vehicle 2 is placed is completed, the condition CND is identified as corresponding to the unready condition (and also the available condition) until a signal indicating the completion of the grasping is detected from a notification device such as a switch or a button. When the practical operator notifies the management server 1 whether or not it is possible to grasp the situation in which the vehicle 2 is placed, when a signal indicating that it is impossible to grasp the situation is detected from a notification device such as a switch or a button, the condition CND is identified as corresponding to the unready condition (and also the unavailable condition).

In another example, the condition CND is identified based on the communication state between the management server 1 and the vehicle 2 and the communication state between the management server 1 and the terminal of the operator OP. To be more specific, when a communication delay occurs between the management server 1 and the vehicle 2 or between the management server 1 and the operator terminal 3, the condition CND identified as corresponding to the unavailable condition (and also the available condition or the unavailable condition) according to a level of the communication delay.

In yet another example, the condition CND is identified based on a state of a system that performs the remote support of the vehicle 2. Specifically, when the state of the system is normal, the condition CND identified as corresponding to the ready condition. When the state of the system is abnormal, the condition CND identified as corresponding to the unavailable condition (and also the available condition or the unavailable condition) according to a level of the abnormality.

Based on the information on the selection state of the candidates of the operator, the state of the practical operator, the communication state between the management server 1 and the vehicle 2 or between the management server 1 and the operator terminal 3, or the state of the system that performs the remote support of the vehicle 2, the management server 1 identifies which of the three conditions the condition CND is in. Then, based on the identification result, the management server 1 selects one vehicle control mode MD from the five types of the vehicle control mode MDs described above.

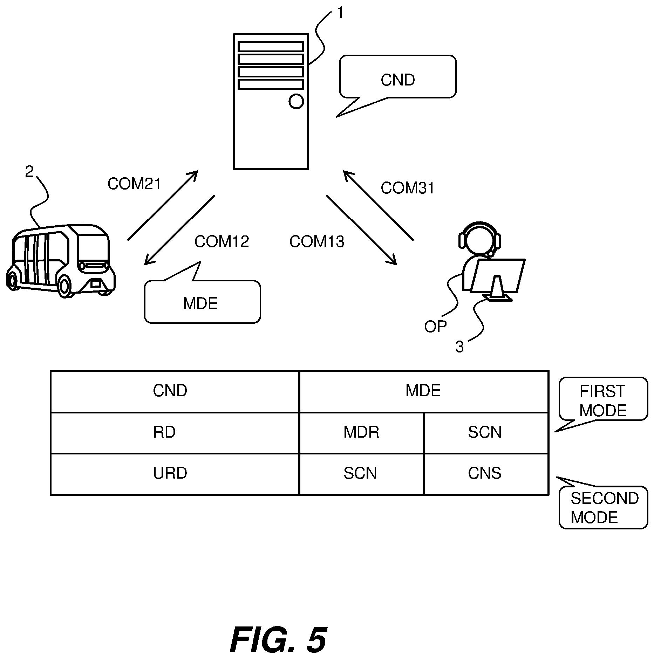

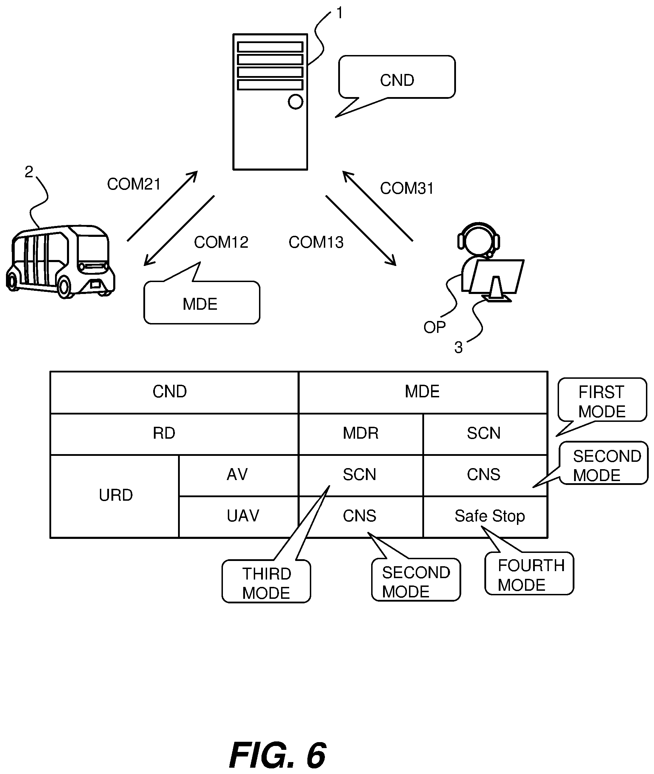

FIGS. 5 and 6 are diagrams for explaining examples of selecting the vehicle control mode MD based on the identification result of the condition CND. In a first example shown in Fig. 5, when the condition CND is identified as the RD condition, the MDR mode is selected, and when the condition CND is identified as the URD condition, the SCN mode is selected. In this example, the MDR mode corresponds to the "first mode" of the present disclosure and the SCN mode corresponds to the "second mode" of the present disclosure. As described above, the relationship between the MDR mode and the SCN mode is the relationship between the first mode and the second mode.

In a second example shown in Fig. 5, when the condition CND is identified as the RD condition, the SCN mode is selected, and when the condition CND is identified as the URD condition, the CNS mode is selected. In this example, the SCN mode corresponds to the "first mode" of the present disclosure, and the CNS mode corresponds to the "second mode" of the present disclosure. The relationship between the SCN mode and the CNS mode is the relationship between the first mode and the second mode.

In a first example shown in Fig. 6, the MDR mode is selected when the condition CND is identified as the RD condition, the SCN mode is selected when the condition CND is identified as the URD condition (AV condition), and the CNS mode is selected when the condition CND is identified as the URD condition (UAV condition). In this example, the MDR mode corresponds to the "first mode" of the present disclosure, the SCN mode corresponds to the "third mode" of the present disclosure, and the CNS mode corresponds to the "second mode" of the present disclosure.

Here, a difference among the first mode, the second mode, and the third mode is the "severity of the safety restriction". That is, the restriction of the driving safety of the second mode is stricter that of the first mode. The restriction of the driving safety of the third mode is stricter than that of the first mode and is looser than that of the second mode. The relationship among the MDR mode, the CNS mode, and the SCN mode is a relationship of first mode, second mode, and third mode.

In a second example shown in Fig. 6, the SCN mode is selected when the condition CND is identified as the RD condition, the CNS mode is selected when the condition CND is identified as the URD condition (AV condition), and the safe stop mode is selected when the condition CND is identified as the URD condition (UAV condition). In this example, the SCN mode corresponds to the "first mode" of the present disclosure, the CNS mode corresponds to the "second mode" of the present disclosure, and the safe stop mode corresponds to the "fourth mode" of the present disclosure. As described above, the relationship between the SCN mode and the CNS mode is the relationship between the first mode and the second mode.

### 4-3. Combination of Need NDS and Condition CND

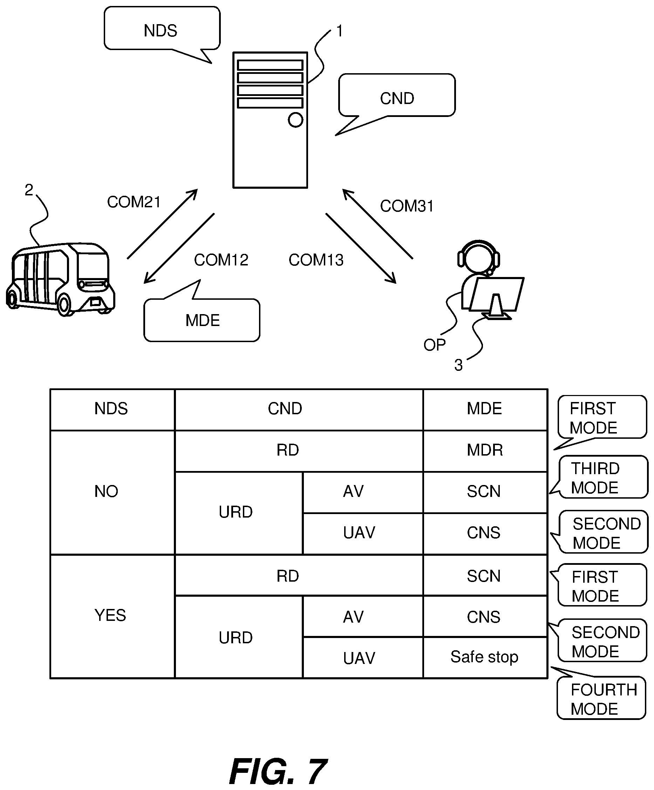

In the example shown in Fig. 4, the vehicle control mode MD is selected based on the need NDS of the remote support. In the examples shown in FIGS. 5 and 6, the vehicle control mode MD is selected based on the condition CND of the remote support end. In the example shown in Fig. 7, the vehicle control mode MD is selected based on a combination of the need NDS of the remote support and the condition CND on the remote support end.

In a first example shown in Fig. 7, when it is determined that there is no need NDS (NO), the MDR mode is selected when the condition CND is identified as the RD condition, the SCN mode is selected when the condition CND is identified as the URD condition (AV condition), and the CNS mode is selected when the condition CND is identified as the URD condition (UAV condition). That is, this first example is an example in which the first example of Fig. 6 is applied when it is determined that there is no need NDS (NO).

In the second example shown in Fig. 7, when it is determined that the need NDS is present (YES), the SCN mode is selected when the condition CND is identified as the RD condition, the CNS mode is selected when the condition CND is identified as the URD condition (AV condition), and the safe stop mode is selected when the condition CND is identified as the URD condition (UAV condition). That is, this second example is an example in which the second example of Fig. 6 is applied when it is determined that there is need NDS (YES).

As described above, according to the embodiment, the vehicle control mode MD is set based on at least one of the need NDSs of the remote support for the vehicle 2 and the condition CND on the remote support end that treats the remote support, and the vehicle control for autonomous driving of the vehicle 2 is performed in accordance with the vehicle control mode MD. Therefore, for example, when the need NDS is switched from absent (NO) to present (YES), the autonomous driving can be appropriately performed until the remote support is started. Even when the need NDS is switched from present (YES) to absent (NO), it is possible to appropriately perform the vehicle control when the autonomous driving is resumed.

In addition, according to the embodiment, it is possible to appropriately perform the autonomous driving until the remote support is started in accordance with the condition CND on the remote support end when the need NDS is switched from absent (NO) to present (YES). In addition, according to the condition CND on the remote support end when the need NDS is switched from present (YES) to absent (NO), it is possible to appropriately perform the vehicle control when the autonomous driving is resumed. This is expected to increase a stability of an execution of the autonomous driving when the need NDS is frequently switched. Thus, according to the embodiments, it is expected to provide secure feeling to the occupant of the vehicle 2 or to minimize an impact on a traffic flow around the vehicle 2.

### 5. Configuration example of system

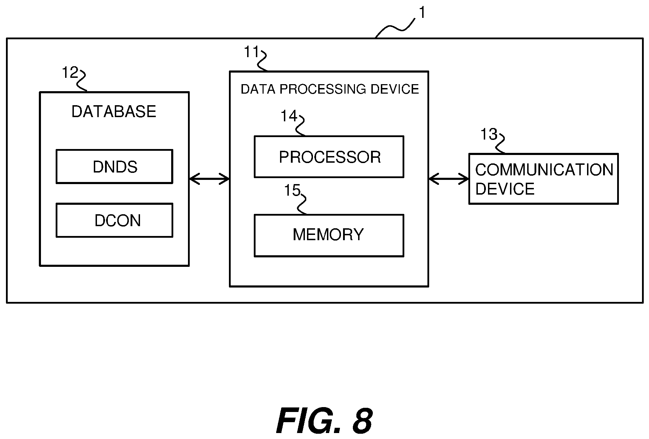

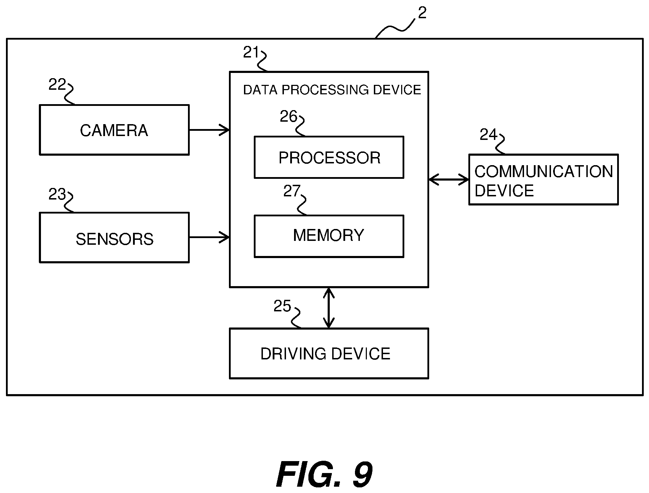

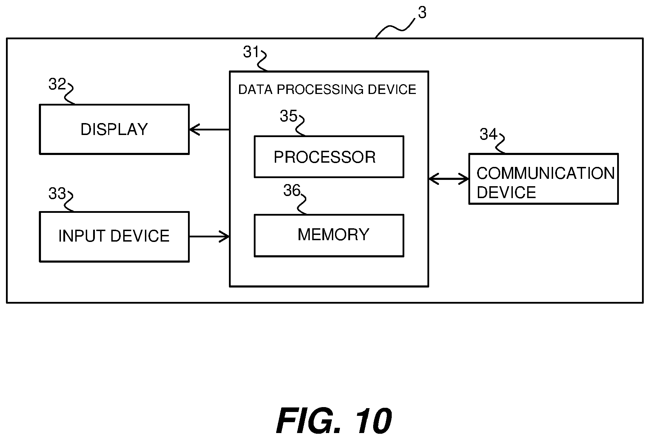

A configuration example of the remote support system will be described with reference to FIGS. 8 to 10. Fig. 8 is a block diagram showing a configuration example of the management server 1. Fig. 9 is a block diagram illustrating a configuration example of the vehicle 2. Fig. 10 is a block diagram illustrating a configuration example of the operator terminal 3.

### 5-1. Configuration example of Management server 1

In the example shown in Fig. 8, the management server 1 includes a data processing device 11, database 12, and a communication device 13. The database 12 and the communication device 13 are connected to the data processing device 11 via a predetermined network.

The data processing device 11 includes at least one processor 14 and at least one memory 15. The processor 14 includes a central processing unit (CPU). The memory 15 is a volatile memory such as a DDR memory, and loads various programs used by the processor 14 and temporarily stores various data. The various programs used by the processor 14 include a control program according to the embodiment. The various data used by the processor 14 includes data stored in the database 12.

Examples of the data stored in the database 12 include the data DNDS used for determining the presence or absence of the need NDS. The data DNDS includes, for example, the data of the camera image of the vehicle 2 (e.g., the surrounding image or the interior image), time-series data of the camera image, data other than the camera image, and time-series data other than the camera image. The data DNDS also includes data of prediction information received from the above-described arbitrary predictor. When the management server 1 has a function as this arbitrary predictor, the data DNDS also includes time-series data of camera images of other vehicles, time-series data of images of infrastructure cameras, and provision history data of remote support services.

Another example of data stored in the database 12 is data DCND used to identify the condition CND on the remote support end. The data DCND includes, for example, data on the selection state of the operator OP scheduled to treat the remote support for the vehicle 2 (i.e., the candidate) and data on whether the approval signal is received from the candidate. In another example, the data DCND includes data of a state of the operator OP (i.e., the practical operator) selected from the candidates of the operator at the time of execution of the remote support, and data regarding whether an approval signal is received from the practical operator. In the case of a method in which the practical operator notifies the management server 1 whether the grasping of the situation where the vehicle 2 is placed is completed, the data DCND includes data regarding whether a signal indicating that the grasping is completed is received and data regarding whether a signal indicating that the grasping is impossible is received.

In another example, the data DCND includes data of the communication state between the management server 1 and the vehicle 2 and data of the communication state between the management server 1 and the terminal of the operator OP. In yet another example, data on the status of the system providing remote support for vehicle 2 is included in data DCND.

The communication device 13 is connected to an external device via a communication network. The communication network is not particularly limited, and a wired or wireless network can be used. Examples of the communication line network include an Internet line, a world wide web (WWW), a telephone line, a local area network (LAN), a storage area network (SAN), and a delay tolerant network (DTN). Examples of the wireless communication include Wi-Fi (Wireless Fidelity) and Bluetooth (registered trademark). The wireless communication may be a mode in which the management server 1 performs direct communication (Ad Hoc communication) or may be indirect communication via an access point. The communication destinations of the communication device 13 include the vehicle 2 and the operator terminal 3.

### 5-2. Configuration example of Vehicle 2

In the example shown in Fig. 9, the vehicle 2 includes a data processing device 21, a camera 22, sensors 23, a communication device 24, and a driving device 25. Elements such as the camera 22 and the driving device 25 are connected to the data processing device 21 via a predetermined network.

The data processing device 21 is a computer for processing various data acquired by the vehicle 2. The data processing device 21 includes at least one processor 26 and at least one memory 27. The processor 26 includes a CPU. The memory 27 expands various programs used by the processor 26 and temporarily stores various data. The various data acquired by the data processing device 21 is stored in the memory 27.

By executing the program stored in the memory 27, the processor 26 performs processing to rank a plurality of candidates of the driving route sequentially calculated by the navigation system by an aspect called "the driving severity of the safety restriction". When the processor 26 receives the mode information MDE from the management server 1, the processor 26 executes the program stored in the memory 27 to select a candidate corresponding to the mode information MDE from the ranked candidates of the driving route.

The processor 26 also sets various limit values, thresholds, and variables used in the vehicle control for the autonomous driving of the vehicle 2 by executing the program stored in the memory 27. When the mode information MDE is received from the management server 1, the processor 26 sets various limit values, thresholds, and variables corresponding to the mode information MDE. As described above, the limit value, the threshold, and the variable are ranked in at least four levels in advance in the aspect of "the driving severity of the safety restriction".

The processor 26 also performs control for remote support of the vehicle 2 by executing a program stored in the memory 27. For example, the vehicle 2 determines whether or not the remote support is required by executing a program stored in the memory 27. When it is determined that the remote support is required, the processor 26 generates request information on the remote support and transmits the request information to the management server 1 via the communication device 24.

The camera 22 images the surroundings of the vehicle 2 and the interior of the vehicle 2. The sensor group 23 includes a recognition sensor (an external sensor) other than the camera. Examples of the recognition sensor include a laser imaging detection and ranging (LiDAR) and a radar. The sensors 23 also include an internal sensor of the vehicle 2. Examples of the internal sensor include a vehicle speed sensor, an acceleration sensor, and a yaw rate sensor. The sensors 23 also include a sensor (a GPS sensor) that acquires positional information of the vehicle 2.

The communication device 24 wirelessly communicates with a base station of the wireless network. Examples of the communication standard the wireless communication, a mobile vehicle communication standard such as 4G, LTE, or 5G is exemplified. The connection point of the communication device 24 includes at least the management server 1. In the communication with the management server 1, the communication device 24 transmits various data received from the camera 22 and the sensors 23 to the management server 1. When the remote support request information is generated, the communication device 24 transmits the data of the request information to the management server 1. The communication device 24 also receives data of the mode information MDE from the management server 1.

The driving device 25 includes, for example, the driving device, the steering device, and the brake device. The driving device drives tires of the vehicle 2. The steering device steers the tires of the vehicle 2. The brake device applies a braking force to the vehicle 2. The acceleration of the vehicle 2 is performed by control of the driving device. The deceleration of the vehicle 2 is performed by control of the brake device. When the driving device is a motor, braking of the vehicle 2 may be performed using regenerative braking by controlling the motor. The steering of the vehicle 2 is performed by controlling the steering device.

### 5-3. Configuration example of Operator terminal 3

In the example shown in Fig. 10, the operator terminal 3 includes a data processing device 31, a display 32, an input device 33, and a communication device 34. Elements such as the display 32 and the input device 33 are connected to the data processing device 31 via a predetermined network.

The data processing device 31 is a computer for processing various data acquired by the vehicle 2. The data processing device 31 includes at least one processor 35 and at least one memory 36. The processor 35 includes a CPU. The memory 36 expands various programs used by the processor 35 and temporarily stores various data. Various data acquired by the data processing device 31 and various data generated based on an input signal from the input device 33 are stored in the memory 36. Examples of the former data include the data of the camera image of the vehicle 2 received from the management server 1. Examples of the latter data include the recognition support data and the determination support data. When the remote driving of the vehicle 2 is performed, the data of the latter also includes data of the driving operation.

The display 32 is a device to which a camera image for performing the remote support for the vehicle 2 is output. The total number of displays 32 is at least one. The total number of 32 displays should be at least 2 in order to output separate camera images of the surroundings of the vehicle 2 and the interior of the vehicle 2.

The input device 33 is a device operated by the operator OP. The input device 33 includes, for example, an input unit that receives an input from the operator OP, and a control circuit that generates and outputs data of recognition support and determination support based on the input. Examples of the input unit include a touch panel, a mouse, a keyboard, a button, and a switch. Examples of the input by the operator OP include an operation of moving a cursor output on the display 32 and an operation of selecting a button output on the display 32.

When the remote driving of the vehicle 2 is performed, the input device 33 may include an input device for the traveling. Examples of the driving input device include a steering wheel, a shift lever, an accelerator pedal, and a brake pedal.

The communication device 34 is connected to an external device via a communication network. The communication network is not particularly limited, and a wired or wireless network can be used. The communication destination of the communication device 34 includes at least the management server 1. In the communication with the management server 1, the communication device 34 transmits various data used for identifying the condition CND of the remote support end to the management server 1. Examples of the various data include the approval signal of the operator OP scheduled to treat to the remote support for the vehicle 2, and data of the state of the operator OP selected from candidates of when the remote support is executed. When remote support for the vehicle 2 is performed, the communication device 34 transmits data of recognition support and determination support to the management server 1. The communication device 34 also receives data of a camera image of the vehicle 2 and the like from the management server 1.

### 6. Example of data processing

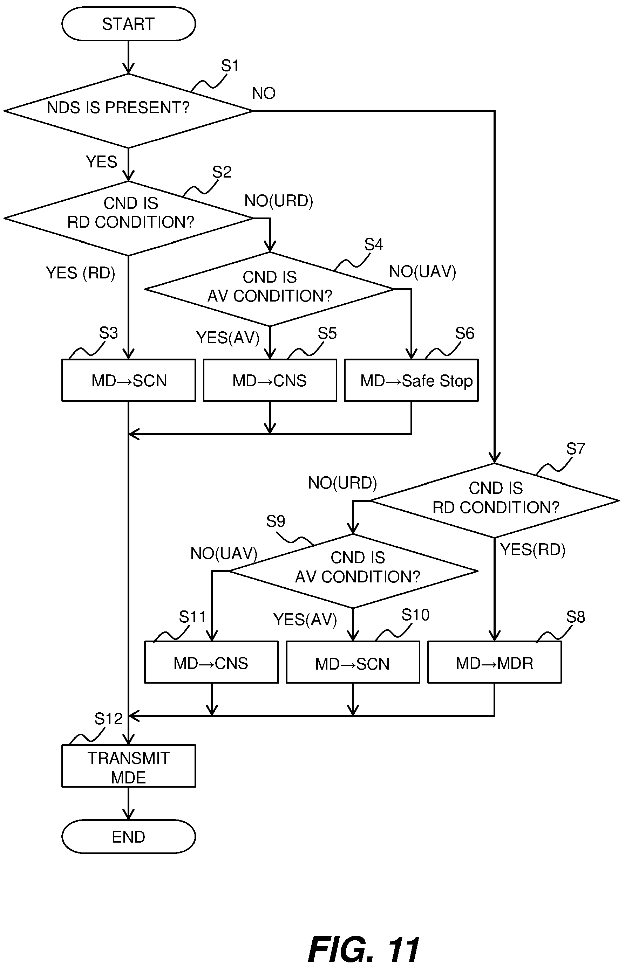

Fig. 11 is a flowchart showing a flow of processing executed in the management server 1 (the processor 14) and particularly related to the embodiment. In order to avoid repetition of description, in Fig. 11, the selection processing example of the vehicle control mode MD based on the combination of the need NDS and the condition CND described in Fig. 7 will be described. The routine shown in Fig. 11 is repeatedly executed at a predetermined control cycle, for example.

In the routine shown in Fig. 11, it is first determined whether there is the need NDS of the remote support for vehicle 2 (step S1). Whether or not there is need NDS is determined based on the data DNDS stored in the database 12. When the determination result of step S1 is positive (i.e., when the need NDS is present (YES)), the processing of step S2 and subsequent steps is performed. When the determination result of step S1 is negative (i.e., when need NDS is present (NO)), the processing of step S7 and subsequent steps is performed.

In the processing of step S2, it is determined whether the condition CND on the remote support end is the RD condition. The condition CND is identified based on the data DCND stored in the database 12. As described above, the state in which the remote support for the vehicle 2 is ready is the RD condition.

When the determination result in step S2 is positive (that is, when the condition CND is the RD condition), the SCN mode is selected as the vehicle control mode (step S3). When the determination result of step S2 is negative (i.e., when the condition CND is the URD condition), the processing of step S4 and subsequent steps is performed. As described above, the state in which the remote support for the vehicle 2 is not ready is the URD condition.

In the processing of step S4, it is determined whether or not the condition CND on the remote support end is the AV condition. The condition CND has already been identified in the process of step S2. The processing of step S4 is performed using the processing result of step S2. As described above, the AV condition is ready to be switched to the RD condition.

When the determination result in step S4 is positive (that is, when the condition CND is the AV condition), the CNS mode is selected as the vehicle control mode (step S5). When the determination result of step S4 is negative (that is, when the condition CND is the UAV condition), the safety stop mode is selected as the vehicle control mode (step S6). As described above, the state in which preparation for switching to the RD condition is not completed is the UAV condition.

In the processing of step S7, it is determined whether the condition CND on the remote support end is the RD condition. That is, the content of the processing of step S7 is the same as that of step S2. When the determination result in step S7 is positive (that is, when the condition CND is the RD condition), the MDR mode is selected as the vehicle control mode (step S8). When the determination result of step S7 is negative (i.e., when the condition CND is the URD condition), the processing of step S9 and subsequent steps is performed.

In the processing of step S9, it is determined whether the condition CND on the remote support end is the AV condition. That is, the content of the process of step S9 is the same as that of step S4. When the determination result in step S9 is positive (that is, when the condition CND is the AV condition), the SCN mode is selected as the vehicle control mode (step S10). When the determination result in step S9 is negative (that is, when the condition CND is the UAV condition), the CNS mode is selected as the vehicle control mode (step S11).

Subsequent to the processing of step S3, S5, S6, S8, S10 or S11, the information of the vehicle control mode selected in the processing of these steps (i.e., the mode information MDE) is transmitted to the vehicle 2 (step S12).

### 7. Effect

According to the embodiment described above, the vehicle control mode MD is set based on at least one of the need NDSs of the remote support for the vehicle 2 and the condition CND on the remote support end that treats the remote support, and the vehicle control for autonomous driving of the vehicle 2 is performed according to the information of the vehicle control mode MD. Therefore, for example, when the need NDS is switched from absent (NO) to present (YES), autonomous driving can be appropriately performed until remote support for the vehicle 2 is started. Even when the need NDS is switched from present (YES) to absent (NO), it is possible to appropriately perform the vehicle control when the autonomous driving is resumed.

In addition, according to the embodiment, it is possible to appropriately perform the autonomous driving until the remote support is started in accordance with the condition CND on the remote support end when the need NDS is switched from absent (NO) to present (YES). In addition, according to the condition CND on the remote support end when the need NDS is switched from present (YES) to absent (NO), it is possible to appropriately perform the vehicle control when the autonomous driving is resumed. This is expected to increase the stability of the execution of the autonomous driving when the need NDS is frequently switched. Thus, according to the embodiment, it is expected to provide secure feeling to the occupant of the vehicle 2 or to minimize the impact on the traffic flow around the vehicle 2.

## Claims

1. A method for controlling a mobile vehicle (2) having an autonomous driving function and a remote support receiving function, **characterized in that** the method comprises the steps of:
selecting a control mode for autonomous driving of the mobile vehicle; and
transmitting information on the selected control mode to the mobile vehicle,
wherein the control mode includes a first mode (MDR), a second mode (CNS) of which a restriction on a driving safety is stricter than that of the first mode, and a third mode (SCN) of which the restriction is stricter than that of the first mode and is looser than that of the second mode,
wherein the step of selecting the control mode is executed by a processor (14) and comprises the steps of:
determining whether a remote support for the mobile vehicle is required;
identifying a condition of a remote support end that treats remote support for the mobile vehicle; and
**characterized in that**:
the control mode includes a fourth mode for stopping the mobile vehicle in a breakdown lane or a side strip,
the step of selecting the control further comprises selecting, from among options including the first, second, third, and fourth modes, the control mode corresponding to a combination of a determination result indicating whether the remote support is required and an identification result of the condition of the remote support end,
**in that** the condition of the remote support end includes a ready condition (RD) in which a preparation to treat the remote support is completed and an unready condition (URD) in which the preparation to treat the remote support is not completed, wherein the unready condition includes an available condition (AV) in which a preparation for switching to the ready condition is completed and an unavailable condition (UAV) in which preparation for switching is not completed;
wherein the step of identifying the condition of the remote support end comprises the step of identifying whether the condition of the remote support end is the available condition or the unavailable condition when it is identified that the condition of the remote support end is the unready condition;
wherein, in the step of selecting the control mode, either:
(i) when it is determined that the remote support is required and the condition of the remote support end is identified as the ready condition, the third mode is selected as the control mode corresponding to the combination, or
(ii) when it is determined that the remote support is required and it is identified that the condition of the remote support end is the unready condition and the available condition, the second mode is selected as the control mode corresponding to the combination, or
(iii) when it is determined that the remote support is required and it is identified that the condition of the remote support end is the unready condition and the unavailable condition, the fourth mode is selected as the control mode corresponding to the combination.

2. The method according to claim 1,
wherein, the step of selecting the control mode further includes options:
(iv) when it is determined that the remote support is not required and the condition of the remote support end is identified as the ready condition, the first mode is selected as the control mode corresponding to the combination, and
(v) when it is determined that the remote support is not required and the condition of the remote support end is identified as the unready condition, the third mode is selected as the control mode corresponding to the combination.

3. The method according to claim 1,
wherein, the step of selecting the control mode further includes options:
(vi) when it is determined that the remote support is not required and it is identified that the condition of the remote support end is the unready condition and the available condition the third mode is selected as the control mode corresponding to the combination, and
(vii) when it is determined that the remote support is not required and it is identified that the condition of the remote support end is the unready condition and the unavailable condition, the second mode is selected as the control mode corresponding to the combination.

4. An apparatus for controlling a mobile vehicle (2) having an autonomous driving function and a remote support receiving function, **characterized in that** the apparatus comprises:
a processor (14) configured to execute processing to select a control mode for autonomous driving of the mobile vehicle and processing to transmit information on the selected control mode to the mobile vehicle,
wherein the control mode includes a first mode (MDR), a second mode (CNS) of which a restriction on a driving safety is stricter than that of the first mode, a third mode (SCN) of which the restriction is stricter than that of the first mode and is looser than that of the second mode, and a fourth mode for stopping the mobile vehicle in a breakdown lane or a side strip,
wherein, in the processing to select the control mode, the processor is configured to:
execute processing to determine whether a remote support for the mobile vehicle is required;
execute processing to identify a condition of a remote support end that treats the remote support for the mobile vehicle; and
**characterized in that**:
the processor is configured to execute processing to select, from among options including the first, second, third, and fourth modes, the control mode corresponding to a combination of a determination result indicating whether or not the remote support is required and an identification result of the condition of the remote support end,
**in that** the condition of the remote support end includes a ready condition (RD) in which a preparation to treat the remote support is completed and an unready condition (URD) in which the preparation to treat the remote support is not completed, wherein the unready condition includes an available condition (AV) in which a preparation for switching to the ready condition is completed and an unavailable condition (UAV) in which preparation for switching is not completed;
wherein the step of identifying the condition of the remote support end comprises the step of identifying whether the condition of the remote support end is the available condition or the unavailable condition when it is identified that the condition of the remote support end is the unready condition;
wherein, in the step of selecting the control mode, either:
(i) when it is determined that the remote support is required and the condition of the remote support end is identified as the ready condition, the third mode is selected as the control mode corresponding to the combination, or
(ii) when it is determined that the remote support is required and it is identified that the condition of the remote support end is the unready condition and the available condition, the second mode is selected as the control mode corresponding to the combination, or
(iii) when it is determined that the remote support is required and it is identified that the condition of the remote support end is the unready condition and the unavailable condition, the fourth mode is selected as the control mode corresponding to the combination.

## Patentansprüche

1. Verfahren zum Steuern eines mobilen Fahrzeugs (2) mit einer autonomen Fahrfunktion und einer Fernunterstützungsempfangsfunktion, **dadurch gekennzeichnet, dass** das Verfahren die Schritte umfasst:
Auswählen eines Steuerungsmodus für das autonome Fahren des mobilen Fahrzeugs; und
Übertragen von Informationen über den ausgewählten Steuerungsmodus an das mobile Fahrzeug,
wobei der Steuerungsmodus einen ersten Modus (MDR), einen zweiten Modus (CNS), von dem eine Einschränkung bezüglich der Fahrsicherheit strenger ist als die des ersten Modus, und einen dritten Modus (SCN), dessen Einschränkung strenger ist als die des ersten Modus und lockerer als die des zweiten Modus ist,
wobei der Schritt des Auswählens des Steuerungsmodus von einem Prozessor (14) ausgeführt wird und die Schritte umfasst:
Bestimmen, ob eine Fernunterstützung für das mobile Fahrzeug erforderlich ist;
Identifizieren eines Zustands eines Fernunterstützungsendes, das die Fernunterstützung für das mobile Fahrzeug behandelt; und
**dadurch gekennzeichnet, dass**:
der Steuerungsmodus einen vierten Modus zum Anhalten des mobilen Fahrzeugs in einer Pannenspur oder auf einem Seitenstreifen beinhaltet,
der Schritt des Auswählens der Steuerung ferner das Auswählen aus Optionen, die den ersten, zweiten, dritten und vierten Modus beinhalten, des Steuerungsmodus umfasst, der einer Kombination aus einem Bestimmungsergebnis, das angibt, ob die Fernunterstützung erforderlich ist, und einem Identifizierungsergebnis des Zustands des Fernunterstützungsendes entspricht,
der Zustand des Fernunterstützungsendes einen Bereitschaftszustand (RD), in dem eine Vorbereitung für die Behandlung der Fernunterstützung abgeschlossen ist, und einen Nichtbereitschaftszustand (URD) beinhaltet, in dem die Vorbereitung für die Behandlung der Fernunterstützung nicht abgeschlossen ist, wobei der Nichtbereitschaftszustand einen verfügbaren Zustand (AV), in dem eine Vorbereitung zum Umschalten in den Bereitschaftszustand abgeschlossen ist, und einen nicht verfügbaren Zustand (UAV) beinhaltet, in dem die Vorbereitung zum Umschalten nicht abgeschlossen ist;
wobei der Schritt des Identifizierens des Zustands des Fernunterstützungsendes den Schritt des Identifizierens umfasst, ob der Zustand des Fernunterstützungsendes der verfügbare Zustand oder der nicht verfügbare Zustand ist, wenn identifiziert wird, dass der Zustand des Fernunterstützungsendes der Nichtbereitschaftszustand ist;
wobei in dem Schritt des Auswählens des Steuerungsmodus entweder:
(i) wenn bestimmt wird, dass die Fernunterstützung erforderlich ist und der Zustand des Fernunterstützungsendes als der Bereitschaftszustand identifiziert wird, der dritte Modus als der Steuerungsmodus ausgewählt wird, der der Kombination entspricht, oder
(ii) wenn bestimmt wird, dass die Fernunterstützung erforderlich ist und identifiziert wird, dass der Zustand des Fernunterstützungsendes der Nichtbereitschaftszustand und der verfügbare Zustand ist, der zweite Modus als der Steuerungsmodus ausgewählt wird, der der Kombination entspricht, oder
(iii) wenn bestimmt wird, dass die Fernunterstützung erforderlich ist und identifiziert wird, dass der Zustand des Fernunterstützungsendes der Nichtbereitschaftszustand und der nicht verfügbare Zustand ist, der vierte Modus als der Steuerungsmodus ausgewählt wird, der der Kombination entspricht.

2. Verfahren nach Anspruch 1,
wobei der Schritt des Auswählens des Steuerungsmodus ferner Optionen beinhaltet:
(iv) wenn bestimmt wird, dass die Fernunterstützung nicht erforderlich ist und der Zustand des Fernunterstützungsendes als der Bereitschaftszustand identifiziert wird, der erste Modus als der Steuerungsmodus ausgewählt wird, der der Kombination entspricht, und
(v) wenn bestimmt wird, dass die Fernunterstützung nicht erforderlich ist und der Zustand des Fernunterstützungsendes als der Nichtbereitschaftszustand identifiziert wird, der dritte als der Steuerungsmodus ausgewählt wird, der der Kombination entspricht.

3. Verfahren nach Anspruch 1,
wobei der Schritt des Auswählens des Steuerungsmodus ferner Optionen beinhaltet:
(vi) wenn bestimmt wird, dass die Fernunterstützung nicht erforderlich ist und identifiziert wird, dass der Zustand des Fernunterstützungsendes der Nichtbereitschaftszustand und der verfügbare Zustand ist, der dritte Modus als der Steuerungsmodus ausgewählt wird, der der Kombination entspricht, und
(vii) wenn bestimmt wird, dass die Fernunterstützung nicht erforderlich ist und identifiziert wird, dass der Zustand des Fernunterstützungsendes der Nichtbereitschaftszustand und der nicht verfügbare Zustand ist, der zweite Modus als der Steuerungsmodus ausgewählt wird, der der Kombination entspricht.

4. Einrichtung zum Steuern eines mobilen Fahrzeugs (2) mit einer autonomen Fahrfunktion und einer Fernunterstützungsempfangsfunktion, **dadurch gekennzeichnet, dass** die Einrichtung umfasst:
einen Prozessor (14), der dazu konfiguriert ist, eine Verarbeitung zum Auswählen eines Steuerungsmodus für das autonome Fahren des mobilen Fahrzeugs und eine Verarbeitung zum Übertragen von Informationen über den ausgewählten Steuerungsmodus an das mobile Fahrzeug auszuführen,
wobei der Steuerungsmodus einen ersten Modus (MDR), einen zweiten Modus (CNS), von dem eine Einschränkung bezüglich der Fahrsicherheit strenger ist als die des ersten Modus, einen dritten Modus (SCN), dessen Einschränkung strenger ist als die des ersten Modus und lockerer als die des zweiten Modus ist, und einen vierten Modus zum Anhalten des mobilen Fahrzeugs in einer Pannenspur oder auf einem Seitenstreifen beinhaltet,
wobei der Prozessor bei der Verarbeitung zum Auswählen des Steuerungsmodus konfiguriert ist, zum:
Ausführen einer Verarbeitung, um zu bestimmen, ob eine Fernunterstützung für das mobile Fahrzeug erforderlich ist;
eine Verarbeitung zum Bestimmen, ob eine Fernunterstützung für das mobile Fahrzeug erforderlich ist, ausführt;
eine Verarbeitung zum Identifizieren eines Zustands eines Fernunterstützungsendes, das die Fernunterstützung für das mobile Fahrzeug behandelt, ausführt; und
**dadurch gekennzeichnet, dass**:
der Prozessor dazu konfiguriert ist, eine Verarbeitung zum Auswählen aus Optionen, die den ersten, zweiten, dritten und vierten Modus beinhalten, des Steuerungsmodus auszuführen, der einer Kombination aus einem Bestimmungsergebnis, das angibt, ob die Fernunterstützung erforderlich ist, und einem Identifizierungsergebnis des Zustands des Fernunterstützungsendes entspricht,
der Zustand des Fernunterstützungsendes einen Bereitschaftszustand (RD), in dem eine Vorbereitung für die Behandlung der Fernunterstützung abgeschlossen ist, und einen Nichtbereitschaftszustand (URD) beinhaltet, in dem die Vorbereitung für die Behandlung der Fernunterstützung nicht abgeschlossen ist, wobei der Nichtbereitschaftszustand einen verfügbaren Zustand (AV), in dem eine Vorbereitung zum Umschalten in den Bereitschaftszustand abgeschlossen ist, und einen nicht verfügbaren Zustand (UAV) beinhaltet, in dem die Vorbereitung zum Umschalten nicht abgeschlossen ist;
wobei der Schritt des Identifizierens des Zustands des Fernunterstützungsendes den Schritt des Identifizierens umfasst, ob der Zustand des Fernunterstützungsendes der verfügbare Zustand oder der nicht verfügbare Zustand ist, wenn identifiziert wird, dass der Zustand des Fernunterstützungsendes der Nichtbereitschaftszustand ist;
wobei in dem Schritt des Auswählens des Steuerungsmodus entweder:
(i) wenn bestimmt wird, dass die Fernunterstützung erforderlich ist und der Zustand des Fernunterstützungsendes als der Bereitschaftszustand identifiziert wird, der dritte Modus als der Steuerungsmodus ausgewählt wird, der der Kombination entspricht, oder
(ii) wenn bestimmt wird, dass die Fernunterstützung erforderlich ist und identifiziert wird, dass der Zustand des Fernunterstützungsendes der Nichtbereitschaftszustand und der verfügbare Zustand ist, der zweite Modus als der Steuerungsmodus ausgewählt wird, der der Kombination entspricht, oder
(iii) wenn bestimmt wird, dass die Fernunterstützung erforderlich ist und identifiziert wird, dass der Zustand des Fernunterstützungsendes der Nichtbereitschaftszustand und der nicht verfügbare Zustand ist, der vierte Modus als der Steuerungsmodus ausgewählt wird, der der Kombination entspricht.

## Revendications

1. Procédé de commande d'un véhicule mobile (2) présentant une fonction de conduite autonome et une fonction de réception d'assistance à distance, **caractérisé en ce que** le procédé comprend les étapes consistant à :
sélectionner un mode de commande pour une conduite autonome du véhicule mobile, et
transmettre des informations sur le mode de commande sélectionné au véhicule mobile ;
le mode de commande comprenant un premier mode (MDR), un deuxième mode (CNS) dont une restriction sur la sécurité de conduite est plus stricte que celle du premier mode, et un troisième mode (SCN) dont la restriction est plus stricte que celle du premier mode et plus souple que celle du deuxième mode,
l'étape de sélection du mode de commande étant exécutée par un processeur (14) et comprenant les étapes consistant à :
déterminer si une assistance à distance pour le véhicule mobile est nécessaire,
identifier une situation d'un système d'assistance à distance qui traite l'assistance à distance pour le véhicule mobile, et
**caractérisé en ce que** :
le mode de commande comprend un quatrième mode pour arrêter le véhicule mobile sur une bande d'arrêt d'urgence ou une bande latérale,
l'étape de sélection de la commande comprend en outre la sélection, parmi des options comprenant les premier, deuxième, troisième et quatrième modes, du mode de commande correspondant à une combinaison d'un résultat de détermination indiquant si l'assistance à distance est nécessaire et d'un résultat d'identification de la situation du système d'assistance à distance,
la situation du système d'assistance à distance comprend une situation de fonctionnement (RD) dans laquelle la préparation pour gérer l'assistance à distance est terminée et une situation de non-fonctionnement (URD) dans laquelle la préparation pour gérer l'assistance à distance n'est pas terminée, la situation de non-fonctionnement comprenant une situation de disponibilité (AV) dans laquelle une préparation pour passer à la situation de fonctionnement est terminée et une situation d'indisponibilité (UAV) dans laquelle une préparation pour passer à la situation de fonctionnement n'est pas terminée ;
l'étape consistant à identifier la situation du système d'assistance à distance comprenant l'étape consistant à identifier si la situation du système d'assistance à distance est la situation de disponibilité ou la situation d'indisponibilité lorsqu'il est identifié que la situation du système d'assistance à distance est la situation de non-fonctionnement,
étant entendu que, dans l'étape de sélection du mode de commande, soit :
(i) lorsqu'il est déterminé que l'assistance à distance est nécessaire et que la situation du système d'assistance à distance est identifiée comme étant la situation de fonctionnement, le troisième mode est sélectionné comme mode de commande correspondant à la combinaison, soit
(ii) lorsqu'il est déterminé que l'assistance à distance est nécessaire et qu'il est identifié que la situation du système d'assistance à distance est la situation de non-fonctionnement et la situation de disponibilité, le deuxième mode est sélectionné comme mode de commande correspondant à la combinaison, soit
(iii) lorsqu'il est déterminé que l'assistance à distance est nécessaire et qu'il est identifié que la situation du système d'assistance à distance est la situation de non-fonctionnement et la situation d'indisponibilité, le quatrième mode est sélectionné comme mode de commande correspondant à la combinaison.

2. Procédé selon la revendication 1,
dans lequel l'étape de sélection du mode de commande comprend en outre les options suivantes :
(iv) lorsqu'il est déterminé que l'assistance à distance n'est pas nécessaire et que la situation du système d'assistance à distance est identifiée comme situation de fonctionnement, le premier mode est sélectionné comme mode de commande correspondant à la combinaison, et
(v) lorsqu'il est déterminé que l'assistance à distance n'est pas nécessaire et que la situation du système d'assistance à distance est identifiée comme situation de non-fonctionnement, le troisième mode est sélectionné comme mode de commande correspondant à la combinaison.

3. Procédé selon la revendication 1,
dans lequel l'étape de sélection du mode de commande comprend en outre les options suivantes :
(vi) lorsqu'il est déterminé que l'assistance à distance n'est pas nécessaire et qu'il est identifié que la situation du système d'assistance à distance est la situation de non-fonctionnement et la situation de disponibilité, le troisième mode est sélectionné comme mode de commande correspondant à la combinaison, et
(vii) lorsqu'il est déterminé que l'assistance à distance n'est pas nécessaire et qu'il est identifié que la situation du système d'assistance à distance est la situation de non-fonctionnement et la situation d'indisponibilité, le deuxième mode est sélectionné comme mode de commande correspondant à la combinaison.

4. Dispositif de commande d'un véhicule mobile (2) présentant une fonction de conduite autonome et une fonction de réception d'assistance à distance, **caractérisé en ce que** le dispositif comprend :
un processeur (14) conçu pour exécuter un traitement visant à sélectionner un mode de commande pour une conduite autonome du véhicule mobile et un traitement visant à transmettre des informations sur le mode de commande sélectionné au véhicule mobile ;
le mode de commande comprenant un premier mode (MDR), un deuxième mode (CNS) dont une restriction sur la sécurité de conduite est plus stricte que celle du premier mode, un troisième mode (SCN) dont la restriction est plus stricte que celle du premier mode et plus souple que celle du deuxième mode, et un quatrième mode pour arrêter le véhicule mobile sur une bande d'arrêt d'urgence ou une bande latérale,
le processeur, lors du traitement visant à sélectionner le mode de commande, étant conçu pour :
exécuter un traitement pour déterminer si une assistance à distance pour le véhicule mobile est nécessaire,
exécuter un traitement pour identifier une situation d'un système d'assistance à distance qui traite l'assistance à distance pour le véhicule mobile, et
**caractérisé en ce que** :
le processeur est conçu pour exécuter un traitement visant à sélectionner, parmi des options comprenant les premier, deuxième, troisième et quatrième modes, le mode de commande correspondant à une combinaison d'un résultat de détermination indiquant si l'assistance à distance est nécessaire ou non et d'un résultat d'identification de la situation du système d'assistance à distance,
la situation du système d'assistance à distance comprend une situation de fonctionnement (RD) dans laquelle une préparation pour gérer l'assistance à distance est terminée et une situation de non-fonctionnement (URD) dans laquelle une préparation pour gérer l'assistance à distance n'est pas terminée, la situation de non-fonctionnement comprenant une situation de disponibilité (AV) dans laquelle une préparation pour passer à la situation de fonctionnement est terminée et une situation d'indisponibilité (UAV) dans laquelle une préparation pour passer à la situation de fonctionnement n'est pas terminée ;
l'étape consistant à identifier la situation du système d'assistance à distance comprenant l'étape consistant à identifier si la situation du système d'assistance à distance est la situation de disponibilité ou la situation d'indisponibilité lorsqu'il est identifié que la situation du système d'assistance à distance est la situation de non-fonctionnement,
étant entendu que, dans l'étape de sélection du mode de commande, soit :
(i) lorsqu'il est déterminé que l'assistance à distance est nécessaire et que la situation du système d'assistance à distance est identifiée comme étant la situation de fonctionnement, le troisième mode est sélectionné comme mode de commande correspondant à la combinaison, soit
(ii) lorsqu'il est déterminé que l'assistance à distance est nécessaire et qu'il est identifié que la situation du système d'assistance à distance est la situation de non-fonctionnement et la situation de disponibilité, le deuxième mode est sélectionné comme mode de commande correspondant à la combinaison, soit
(iii) lorsqu'il est déterminé que l'assistance à distance est nécessaire et qu'il est identifié que la situation du système d'assistance à distance est la situation de non-fonctionnement et la situation d'indisponibilité, le quatrième mode est sélectionné comme mode de commande correspondant à la combinaison.
